(19) Europäisches Patentamt
European Patent Office
Office européen des brevets

(11) **EP 1 785 328 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
***B60W 40/10*** *(2006.01)*

(21) Anmeldenummer: **06123562.8**

(22) Anmeldetag: **07.11.2006**

(54) **Verfahren und Vorrichtung zur Korrektur einer Fahrzeuggeschwindigkeit**

Method and device for correcting a vehicle speed

Procédé et dispositif destinés à la correction d'une vitesse d'un véhicule

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2005 DE 102005053666**

(43) Veröffentlichungstag der Anmeldung:
**16.05.2007 Patentblatt 2007/20**

(73) Patentinhaber: **Hella KGaA Hueck & Co.**
**59552 Lippstadt (DE)**

(72) Erfinder:
• **Höver, Norbert**
**59555 Lippstadt (DE)**
• **Magyar, Peter**
**33813 Oerlinghausen (DE)**
• **Ottenhues, Thomas**
**48477 Hörstel (DE)**
• **Wassmuth, Joachim**
**33102 Paderborn (DE)**

(56) Entgegenhaltungen:
FR-A1- 2 845 656    US-A1- 2004 186 649
US-A1- 2005 080 542    US-B1- 6 549 842

• KACHROO P ET AL: "Vehicle control for automated highway systems for improved lateral maneuverability" SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, Bd. 1, 22. Oktober 1995 (1995-10-22), Seiten 777-782, XP010194240 ISBN: 0-7803-2559-1
• LIM E H ET AL: "Lateral and longitudinal vehicle control coupling for automated vehicle operation" AMERICAN CONTROL CONFERENCE, 1999. PROCEEDINGS OF THE 1999 SAN DIEGO, CA, USA 2-4 JUNE 1999, PISCATAWAY, NJ, USA,IEEE, US, Bd. 5, 2. Juni 1999 (1999-06-02), Seiten 3676-3680, XP010345014 ISBN: 0-7803-4990-3

**Beschreibung**

Die vorliegende Erfindung betrifft ein Verfahren zur Berechnung eines Ausgleichwertes für einen Fehler eines Messwertes für die Lateralgeschwindigkeit eines Rades eines Kraftfahrzeugs, ein Verfahren zur Berechnung eines Ausgleichswertes für einen Fehler eines Messwertes für eine Geschwindigkeit eines Kraftfahrzeuges, ein Verfahren zur Berechnung eines Ausgleichwertes für einen Fehler eines Messwerts für einen Weg, den ein Kraftfahrzeug zurückgelegt hat.

Aus dem Stand der Technik, insbesondere aus der Druckschrift mit der Veröffentlichungsnummer DE 196 16 447 A1, sind verschiedene Verfahren zur Ermittlung der Länge einer Parklücke bekannt. Die Länge einer Parklücke wird benötigt, um bei der Verwendung von Ein-und/oder Ausparkhilfesystemen prüfen zu können, ob die Länge der Parklücke ausreichend groß für das Kraftfahrzeug ist.

Ein- und/oder Ausparkhilfesysteme sind für die Erleichterung des Ein-oder Ausparkens von Personen und/oder Lastkraftwagen vorgesehen. Ein Einparkvorgang, der von einem Ein- und/oder Ausparkhilfesystem unterstützt wird, kann beispielsweise aus folgenden Schritten bestehen:

1. Vorbeifahrt an der Umgebung, in der eingeparkt werden soll.

2. Vermessen der Umgebung, d. h. insbesondere das Vermessen von Parklücken und bereits parkenden Fahrzeugen sowie sonstigen Hindernissen durch Abtasten mit Entfernungssensoren, zum Beispiel Radar- oder Ultraschallsensoren.

3. Laufende Bestimmung der Fahrzeugposition und Erfassung der Fahrzeuggeschwindigkeit.

4. Erstellen einer Karte der Umgebung, insbesondere wenn eine Parklücke gefunden worden ist.

5. Auswerten der Karte, um festzustellen, ob eine geeignete Parklücke vorhanden ist.

6. Information des Fahrers und Planung einer Bahn beziehungsweise Trajektorie zum Einparken des Kraftfahrzeugs und

7. Durchführen des Einparkens.

Eine große Bedeutung hat dabei die Geschwindigkeitserfassung beziehungsweise deren Korrektur für die Kartenerstellung. Die Kartenerstellung läuft meistens als ein dynamischer Vorgang ab. Der Fahrer sucht eine Parklücke und beschleunigt oder bremst situationsabhängig das Fahrzeug während der Vorbeifahrt an einer vermeintlich geeigneten Parklücke. Die Kartenerstellung und die damit verbundene Registrierung der Fahrzeugposition läuft entweder kontinuierlich oder wird durch Erfassen des Anfangs einer Parklücke begonnen. Dieser Anfangspunkt ist dann der maßgebliche Bezugspunkt. Bezogen auf diesen Punkt werden die Umrisse der Parklücke und die sonstigen Hindernisse erfasst und die Endposition berechnet, die das Fahrzeug nach dem Einparken einnehmen soll. Die Genauigkeit der Karte ist von großer Bedeutung, weil dadurch auch kurze und enge Parklücken benutzt werden können und umgekehrt vom Fahrer als geeignet erkannte Parklücken als ungeeignet verworfen werden können.

Die Genauigkeit der Vermessung der Parklücken und der Erstellung der Karte hängt im Wesentlichen von der Genauigkeit der Umgebungsabtastung und ihrer Auswertung und von der Genauigkeit der Erfassung der Fahrzeuggeschwindigkeit ab. Im Folgenden soll dabei insbesondere die Genauigkeit der Erfassung der Fahrzeuggeschwindigkeit diskutiert werden, was in der Vergangenheit nicht immer ausreichend der Fall war.

Die Genauigkeit der Karte beziehungsweise die damit verbundene Fahrzeugposition wird auch bei der fehlerfreien Abtastung mit einer unendlich großen Auflösung von der Genauigkeit der erfassten Fahrzeuggeschwindigkeit abhängen. Fährt das Fahrzeug nicht parallel zur Parklücke und/oder befindet sich die Parklücke in einer Kurve, ist nicht nur die x-Koordinate, sondern alle drei Koordinaten x, y und ψ des Fahrzeugs während einer Vorbeifahrt an der Parklücke von Bedeutung. Diese Koordinaten werden durch ein rechnerisches Modell bestimmt, deren Eingangsgrößen der Einschlagwinkel der gelenkten Räder und die Fahrzeuggeschwindigkeit sind. Aus dieser kurzen Übersicht ist leicht zu erklären, dass die gemessene Größe der Parklücke von der tatsächlichen Größe der Parklücke abweichen kann und/oder die auf der Karte erfasste Fahrzeugposition nicht der tatsächlichen Fahrzeugposition entspricht, wenn die Geschwindigkeit ungenau erfasst wird.

Einen Fehler verursachen die rollenden Räder, die in erster Linie für die Fortbewegung des Fahrzeugs durch Kraftübertragung dienen, aber auch für die Erfassung der Fahrzeuggeschwindigkeit benutzt werden. Eine oder mehrere Radachsen werden vom Antriebsstrang angetrieben (Zweiradantrieb oder Vierradantrieb) und alle Räder werden vom Bremssystem gebremst. Die so erzeugten Drehmomente erzeugen Kräfte an den Kontaktflächen der Räder auf der Fahrbahn, die wiederum für Beschleunigung und/oder Verzögerung, sowie Überwindung der Fahrwiderstände (Luftwiderstand) bei der Fortbewegung sorgen.

Bei einer Kraftübertragung durch rollende Räder, insbesondere aber bei bereiften Rädern von Kraftfahrzeugen entsteht zwischen der Mantelfläche des Rades und der Fahrbahnfläche, d. h., bei den angetriebenen Rädern und den gebremsten Rädern ein Schlupf. Die Radsignalauswertung, das heißt die Auswertung der Sensoren, die die Drehung der Räder erfassen und als Winkelgeschwindigkeit ausgeben, liefert - unabhängig davon, welches Radsignal ausgewertet wird - ein wegen des Schlupfes fehlerhaftes Signal für die Geschwindigkeitserfassung des Fahrzeuges.

Der Erfindung liegt das Problem zugrunde, Verfahren vorzuschlagen, mit denen die erfasste Geschwindigkeit und gegebenenfalls auch daraus abgeleitet zurückgelegte Wegstrecken so verändert werden, dass die durch den Schlupf entstehenden Fehler weitgehend ausgeglichen sind, die erfasste Geschwindigkeit also möglichst der tatsächlichen Lateralgeschwindigkeit entspricht.

In dem Dokument US 6,549,842 B2 ist ein Verfahren zur Bestimmung des Adhäsionskoeffizienten bzw. des Reibungskoeffizienten. In dem Dokument ist ferner ein Open-Loop-Beobachter zur Erfassung der Lateralgeschwindigkeit des Fahrzeugs offenbart. Dem Open-Loop-Beobachter liegen kinetische Gleichungen zugrunde, die auf das gesamte Fahrzeug bezogen sind und mit der Gierrate des Fahrzeugs in Verbindung stehen. Bei dem Beobachter werden die kinetischen Verhältnisse betrachtet, wozu die Bewegungsursachen (Kräfte, Drehmomente) bekannt sein müssen. Ein solcher Beobachter hilft bei der Suche nach der Lösung des der Erfindung zugrunde liegenden Problems nicht weiter, da nicht die Lateralgeschwindigkeit beobachtet, d.h. geschätzt werden soll. Diese ist durch Messungen bekannt. Vielmehr liegt der Erfindung das Problem zugrunde die gemessene Geschwindigkeit zu korrigieren und den Schlupffehler auszugleichen.

Der nächstliegende Stand der Technik ist in der US2004186649 A1 zu sehen und zeigt ein Verfahren zur Berechnung eines Fehlers eines Messwertes für eine Lateralgeschwindigkeit eines Kraftfahrzeuges.

Die Probleme werden durch die in den Ansprüchen 1 bis 4, Anspruch 6 und in den davon abhängigen Unteransprüchen offenbarten Verfahren beseitigt. Ein Vorteil der erfindungsgemäßen Verfahren ist, dass in dem Kraftfahrzeug keine zusätzlichen Sensoren zur Erfassung physikalischer Größen installiert werden müssen. Es können die von den schon bisher üblicherweise in Kraftfahrzeugen angeordneten Sensoren benutzt werden. Diese Sensoren stellen üblicherweise die erfassten Informationen auf einem Datenbus des Kraftfahrzeugs zur Verfügung. Von diesem Bus können die Signale dann abgefragt werden.

Die Erfindung ist anhand der Zeichnung näher erklärt. Außerdem werden erfindungsgemäße Verfahren näher erläutert.

Es zeigen

Fig. 1          ein vereinfachtes Ein-Rad-Zwei-Massen-Fahrzeugmodell,

Fig. 2          eine Schlupfkennlinie eines Rades,

Fig. 3          ein Ausführungsbeispiel für ein erfindungsgemäßes Verfahren zur Berechnung eines Ausgleichswertes für einen Fehler eines Messwertes für eine Geschwindigkeit eines Kraftfahrzeuges mit vier angetriebenen Rädern,

Fig. 4          ein Ausführungsbeispiel für ein erfindungsgemäßes Verfahren zur Berechnung eines Ausgleichswertes für einen Fehler eines Messwertes für eine Geschwindigkeit eines Kraftfahrzeuges mit zwei angetriebenen Rädern, wobei die Geschwindigkeit der nicht angetriebenen Räder in die Berechnung eingeht,

Fig. 5          ein Ausführungsbeispiel für ein erfindungsgemäßes Verfahren zur Berechnung eines Ausgleichswertes für einen Fehler eines Messwertes für eine Geschwindigkeit eines Kraftfahrzeuges mit zwei angetriebenen Rädern, bei denen die Radgeschwindigkeit aller Räder in die Fahrzeuggeschwindigkeit eingeht,

Fig. 6          ein Ausführungsbeispiel für ein erfindungsgemäßes Verfahren zur Berechnung eines Ausgleichswertes für einen Fehler eines Messwertes für die Geschwindigkeit des Kraftfahrzeugs mit zwei angetriebenen Rädern, bei denen die Radgeschwindigkeit der angetriebenen Räder in die Berechnung eingeht, und

Fig. 7a bis c    Geschwindigkeitszeitdiagramme zur Darstellung der. Vorteile der erfindungsgemäßen Verfahren.

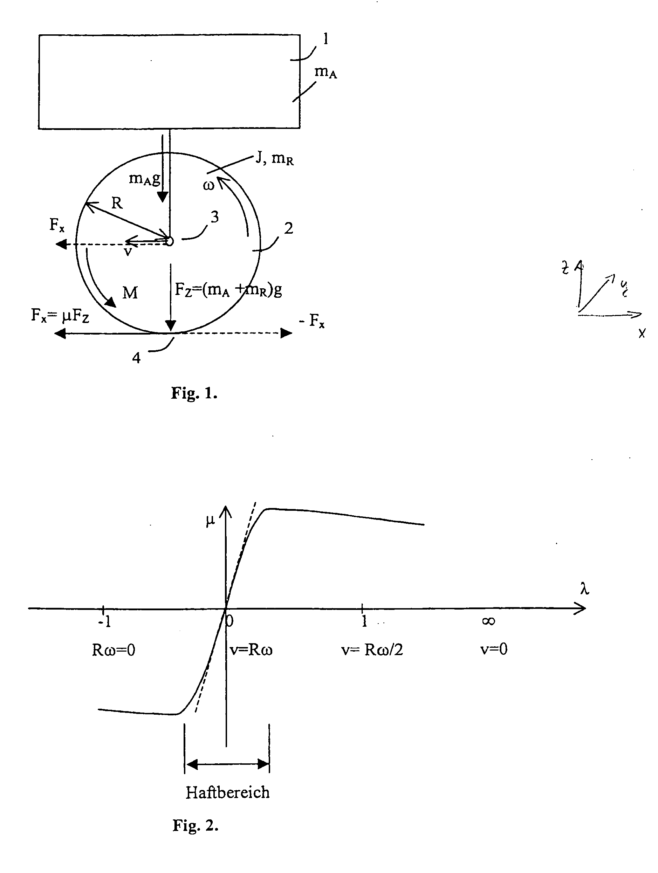

Im Folgenden wird zunächst anhand der Figur 1 und der Figur 2 für ein vereinfachtes Ein-Rad-Zwei-Massen-Fahrzeugmodell die Erfindung und die dahinter stehenden Zusammenhänge erläutert.

In Figur 1 ist ein stark vereinfachtes mathematisches Modell (Ein-Rad-Zwei-Massen-Modell) eines Fahrzeugs dargestellt, das einen Aufbau 1 und ein Rad 2 aufweist. Das Rad 2 hat einen Mittelpunkt, beziehungsweise eine Drehachse 3 und es liegt auf einem Auflagepunkt 4 auf dem Untergrund auf.

Im Folgenden steht

M das Drehmoment des Rades, und zwar als Summe der Antriebs-und Bremsmomente,

$m_A$ für die Masse des Aufbaus 1,

$m_R$ für die Masse des Rades,

J für das Trägheitsmoment des Rades,

R für den Halbmesser des Rades,

g für die Gravitationsbeschleunigung,

v (t) für die laterale Geschwindigkeit des Radmittelpunktes beziehungsweise des Fahrzeuges und

$\omega$ für die Winkelgeschwindigkeit des Rades.

Aus diesen Größen lassen sich folgende Größen ableiten:

$gm_A$ als Achslast,

$F_Z = g(m_A + m_F)$ als Normalkraft des Rades auf den Untergrund,

$F_X = \mu F_Z$ als Umfangskraft des Rades, die durch Kraft und Reibung erzeugt wird und gleich der Beschleunigungs- bzw. Verzögerungskraft des Fahrzeugs ist und

$-F_X$ als Reaktionskraft auf der Fahrbahn.

Diese abgeleiteten Kräfte sind in Figur 1 dargestellt.

Der Reibungswert $\mu$ ist dabei eine nichtlineare Funktion des relativen Schlupfes $\lambda$:

$$\mu = f(\lambda), \qquad \lambda = \frac{R\varpi - v}{v} \qquad\qquad (1)$$

Ein typischer Verlauf der Abhängigkeit des Reibungswertes $\mu$ von dem relativen Schlupf ist in dem Diagramm der Figur 2 dargestellt.

Außerdem gelten für das Ein-Rad-Zwei-Massen-Modell des Fahrzeugs nach Figur 1 folgende Gleichungen:

$$(m_A + m_R)\frac{dv}{dt} = F_X \qquad\qquad (2)$$

$$J\frac{d\varpi}{dt} = M - F_X R \qquad\qquad (3)$$

$$F_X = \mu g(m_A + m_R) \qquad\qquad (4)$$

Durch Gleichsetzen der beiden Gleichungen (2) und (3) und unter der für Fahrzeuge üblicherweise gültigen Annahme, dass

$$\left(\frac{J}{R^2}+m_A+m_R\right)\frac{dv}{dt} \gg \frac{J}{R^2}\frac{d}{dt}(\lambda v) \tag{5}$$

Ist und die Räder auf der Fahrbahn haften, also

$$\lambda \ll 1 \tag{6}$$

ist, erhält man die Gleichung

$$\frac{dv}{dt}=\frac{M}{mR} \tag{7}$$

für die Bewegungsgleichung, wobei

$$m=m_A+m_R+\frac{J}{R^2} \tag{8}$$

die dynamische Gesamtmasse des Ein-Rad-Zwei-Massen-Modells bezeichnet. Aus den Gleichungen (2) und (4) ergibt sich als zweite Bewegungsgleichung

$$\frac{dv}{dt}=g\,\mu \tag{9}$$

Der nichtlineare Zusammenhang zwischen dem Reibungswert $\mu$ und dem relativen Schlupf $\lambda$ wird für einen für die erfindungsgemäßen Verfahren wichtigen Bereich durch eine lineare Kennlinie angenähert. Dazu wird die nichtlineare Kennlinie im Haftbereich durch deren Tangente ersetzt, woraus sich

$$\mu=K_{\mu\lambda}\,\lambda \tag{10}$$

ergibt, mit dem Parameter

$$K_{\mu\lambda}=\frac{\partial\mu(\lambda)}{\partial\lambda}\bigg|_{\lambda=0} \tag{11}$$

der als longitudinale Steifigkeit des Rades bezeichnet wird.
Weiterhin wird der gesuchte Ausleichswert

$$\Delta v = R\omega - v = \lambda v \tag{12}$$

definiert und außerdem kann die Fahrzeuggeschwindigkeit beziehungsweise Lateralgeschwindigkeit des Rades in Form der Gleichung

$$v = R\,\omega\,\frac{1}{\lambda+1} \tag{13}$$

mithilfe des relativen Schlupfes $\lambda$, ausgedrückt werden.

Aus den Gleichungen (7), (9), (10), (12) und in (13) werden die unbekannten Größen dv/dt, v(t), $\lambda$ und $\mu$ eliminiert. Es kann dann der gesuchte Ausgleichswert aus der Umfangsgeschwindigkeit des Rades berechnet und dadurch zu der folgenden Gleichung gelangt werden:

$$\Delta v(t) = \frac{R\omega(t)M(t)}{mgRK_{\mu\lambda} + M(t)} \tag{14}$$

Die Größen $\omega(t)$ und M(t) sind abhängig von der Zeit. Die Masse m, der Radhalbmesser R und die longitudinale Steifigkeit $K_{\mu\lambda}$ sind konstant oder zumindest annähernd konstant. Diese Größen müssen zur Berechnung des Ausgleichswerts $\Delta v(t)$ bekannt sein. Die Winkelgeschwindigkeit $\omega(t)$ des Rades kann dagegen durch entsprechende Auswertung von Sensoren gewonnen werden. Auch das Drehmoment M(t) kann anhand der im Kraftfahrzeug bekannten Antriebs- und Bremsmomente ermittelt werden. Das Antriebsmoment wird dabei aus dem abgegebenen Motormoment und den Getriebeparametern berechnet, während das Bremsmoment aus dem Bremszylinderdruck und der resultierenden Verstärkung des Bremssystems bestimmt werden kann. Die zur Berechnung notwendigen Größen $\omega(t)$ und M(t) stehen dabei im Datenbus des Kraftfahrzeugs zur Verfügung.

Die Gleichung (14) kann in vielen praktischen Fällen vereinfacht werden. Es gilt nämlich in der Regel

$$mgRK_{\mu\lambda} >> M(t) \tag{15}$$

Bei Personenkraftwagen ist das Verhältnis oftmals ungefähr 100:1. Gleichung (14) kann daher zu der folgenden Gleichung

$$\Delta v(t) \approx \frac{\omega(t)M(t)}{mgK_{\mu\lambda}} \tag{16}$$

vereinfacht werden.

Die Gleichungen (14) und (16) geben einen für die Erstellung der Umgebungskarte notwendigen Ausgleichswert an, mit dem der Geschwindigkeitsfehler zumindest teilweise ausgeglichen werden kann. Falls auch ein Ausgleich für den zurückgelegten Weg zwischen zwei Fahrzeugzuständen ermittelt werden muss, kann dieses durch Integration nach der folgenden Gleichung

$$\Delta s = \int_{t1}^{t2} \Delta v\,(t)dt \tag{17}$$

berechnet werden.

Alternativ zu den in Gleichung (14) und (16) angegebenen Verfahren zur Berechnung eines Ausgleichswerts für einen Fehler eines Messwerts für die Lateralgeschwindigkeit eines Rades eines Kraftfahrzeugs kann der Ausgleichswert auch auf anderen Wegen berechnet werden. Die dafür grundlegenden Gleichungen können aus der Gleichung (9) abgeleitet werden. Die so erhaltenen Gleichungen zur Durchführung von Verfahren zur Berechnung eines Ausgleichswerts für einen Fehler eines Messwerts für die Lateralgeschwindigkeit ist robuster, d. h. weniger störungsanfällig, weil weder Antriebs- noch Drehmomente oder andere sich langsam ändernde Fahrzeugparameter wie Radhalbmesser R und Gesamtmasse M in die Berechnung eingehen.

Zur Ableitung der diesem alternativen Verfahren zugrundeliegenden Gleichungen wird wiederum von Gleichung (12) ausgegangen. Es werden dann die Konventionen nach Gleichung (6) und (7) benutzt. Aus den Gleichungen (9), (10) und (12) erhält man dann für den Ausgleichswert der Geschwindigkeit des Rades beziehungsweise des Fahrzeugs die Gleichung

$$\Delta v(t) = \frac{1}{gK_{\mu\lambda}} v(t) \frac{dv(t)}{dt} \qquad\qquad (18)$$

die nur einen Fahrzeugparameter, nämlich die Steifigkeit $K_{\mu\lambda}$ und nur eine Zustandsgröße, nämlich die Fahrzeuggeschwindigkeit $v(t)$ beinhaltet.

Dabei ist lediglich die gemessene Fahrzeuggeschwindigkeit beziehungsweise gemessene Lateralgeschwindigkeit des Rades abhängig von der Zeit.

Weil bei der Geschwindigkeit $v(t)$ im Kraftfahrzeug in der Regel im Datenbus nicht direkt zur Verfügung steht, wird in vereinfachten zweckmäßigen Verfahren der Erfindung die Größe $v(t)$ durch die Umfangsgeschwindigkeit $R * \omega(t)$ ersetzt und damit die Gleichung

$$\Delta v(t) \approx \frac{R^2}{gK_{\mu\lambda}} \omega(t) \frac{d\omega(t)}{dt} \qquad\qquad (19)$$

erhalten. In dieser Art und Weise erhält man einen recht genauen Wert für die Schlupfkorrektur für den Fall, dass das Fahrzeug beschleunigt beziehungsweise nicht abgebremst wird. Wird das Fahrzeug dagegen abgebremst, wird ein geringerer, vom relativen Schlupf $\lambda$ abhängiger Fehler entstehen. Der Fehler ist umso kleiner, je geringer die Bremsverzögerung ist.

Auch die Gleichungen (18) und (19) geben die für die Erstellung der Karte notwendigen Ausgleichswerte für eine Korrektur der Fahrzeuggeschwindigkeit an. Falls wiederum ein Ausgleichswert des Fehlers des Weges zwischen zwei Fahrzeugpositionen berechnet werden muss, kann dieser durch Integration nach der folgenden Gleichung erfolgen:

$$\Delta s = \int_{t1}^{t2} \Delta v\ (t)dt \qquad\qquad (20)$$

In diesem Falle erhält man

$$\Delta s = \frac{1}{gK_{\mu\lambda}} \int_{t1}^{t2} v(t) \frac{dv(t)}{dt} = \frac{1}{2gK_{\mu\lambda}} (v_2^2 - v_1^2)$$

$$(21)$$

$$v_1 = v(t1), \qquad v_2 = v(t2)$$

beziehungsweise näherungsweise

$$\Delta s \approx \frac{R^2}{gK_{\mu\lambda}} \int_{t1}^{t2} \omega(t) \frac{d\omega(t)}{dt} dt = \frac{R^2}{2gK_{\mu\lambda}} (\omega_2^2 - \omega_1^2)$$

$$(22)$$

$$\omega_1 = \omega(t1), \qquad \omega_2 = \omega(t2)$$

Die Gleichungen (21) und (22) zeigen, dass der durch den Schlupf $\lambda$ verursachte Wegfehler zwischen zwei Fahrzeugpositionen nur von den aktuellen Fahrzeuggeschwindigkeiten in diesen beiden Positionen abhängt. Der Ausgleichswert hängt weder von dem Fahrtverlauf noch von dem resultierenden Fahrtweg noch von der Intensität der Beschleunigung und/oder der Verzögerung ab.

Der Vorteil der nach der zweiten Methode (Gleichungen 18, 19, 21 und 22) berechneten Ausgleichswerte ist, dass die Drehmomenterfassung für die Berechnung der Ausgleichswerte nicht notwendig ist. Eine Drehmomentenerfassung ist eventuell nur für die Aufnahme der Schlupfkennlinie, also für die Bestimmung der

Steifigkeit $K_{\mu\lambda}$ notwendig. Außerdem ist die Gesamtmasse des Fahrzeugs unbeachtlich. Die Methode nach den genannten Gleichungen ist daher robust und die Genauigkeit des Ausgleichwerts hängt im Wesentlichen von der Winkelgeschwindigkeit w(t) des Rades beziehungsweise der Räder und der Steifigkeit $K_{\mu\lambda}$ ab.

Die Gleichung (21) ist außerdem gut geeignet für die Bestimmung der Größenordnung eines Ausgleichswerts für die Geschwindigkeit. Als Beispiel sei ein Abbremsvorgang bei der Geschwindigkeit von v(t1) = 10m/s auf v(t2) = 0m/s eines Fahrzeugs mit der Steifigkeit $K_{\mu\lambda}$ = 17. Dabei ergibt sich $\Delta s$ = -29,98 cm. Die tatsächlich gefahrene Wegstrecke ist daher fast 30 cm kleiner als die vom Kraftfahrzeug gemessene.

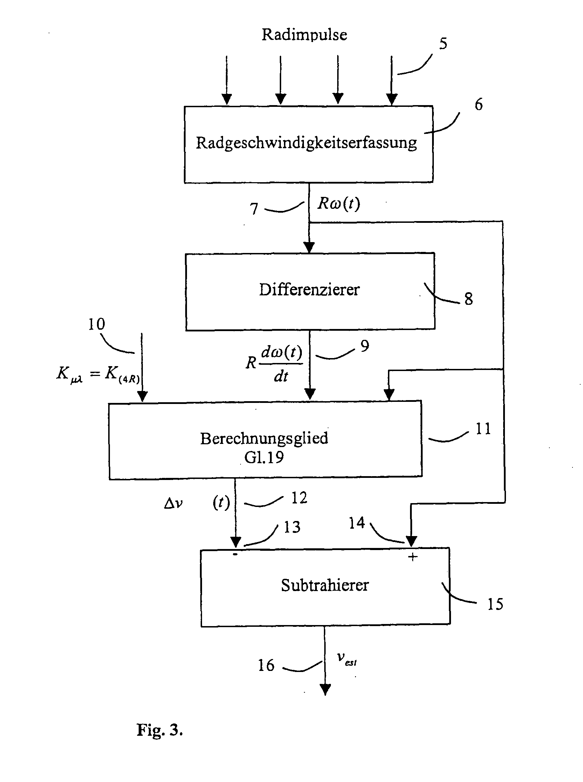

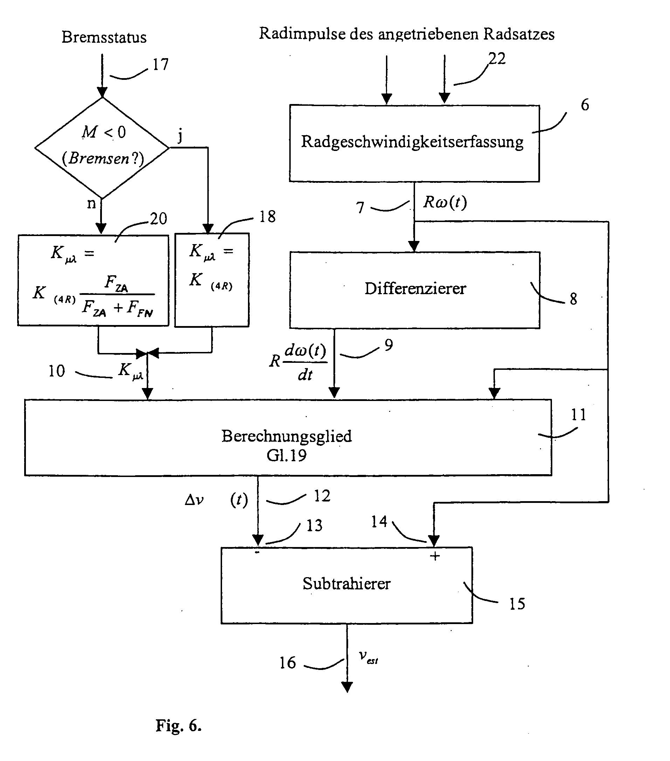

Bei den Vorrichtungen zur Durchführung des Verfahrens wie sie anhand der Figuren 3 bis 6 erläutert werden, wird berücksichtigt, dass das Fahrzeug gegenüber dem vereinfachten Ein-Rad-Zwei-Massen-Modell nach Fig. 1 zwei Radachsen hat. Entweder werden beide Radachsen gebremst und angetrieben (Vierradantrieb) oder nur eine Radachse (Vorderrad- beziehungsweise Hinterradantrieb). In beiden Fällen werden jeweils beide Radachsen gebremst. Diese Eigenschaften der Fahrzeuge bestimmen Unterschiede der Verfahren und der Vorrichtungen zur Durchführung der erfindungsgemäßen Verfahren die sich daraus ergeben. Sie unterscheiden sich im Wesentlichen in der Auswahl des für das Fahrzeug angenommenen Gesamtsteifigkeit $K_{\mu\lambda}$.

Für das in Fig. 3 beschriebene Verfahren zur Berechnung eines Ausgleichswerts für einen Fehler des Messwerts für die Geschwindigkeit des Kraftfahrzeuges werden zunächst die Winkelgeschwindigkeiten der vier angetriebenen und gebremsten Räder erfasst. Aus den einzelnen Winkelgeschwindigkeitssignalen 5 werden mittels eines Mittels 6 zur Ermittlung einer für das gesamte Fahrzeug geltenden globalen Winkelgeschwindigkeit eine Winkelgeschwindigkeit w (t) ermittelt. Diese wird mit einem für alle Räder global ermittelten Halbmesser R als Ausgangssignal 7 von dem Mittel zur Verfügung gestellt. In der Regel ist dieses Signal über einen Datenbus des Fahrzeugs abgreifbar. Das Signal 7, d. h. das Produkt aus Halbmesser R und Winkelgeschwindigkeit $\omega$(t) wird zum Einen einem Differenzierer 8 zugeführt, der die erste zeitliche Ableitung des Signals 7 bestimmt. Zum Anderen wird das Signal 7 einem Berechnungsglied 11 zugeführt, welchem auch das abgeleitete Signal 9 des Signals 7 und eine für das gesamte Fahrzeug geltende globale Steifigkeit $K_{\mu\lambda}$ zugeführt wird. Letzteres ist mit dem Bezugszeichen 10 bezeichnet. Das Berechnungsglied ermittelt aus den Eingangsgrößen 7, 9, 10 mittels der Gleichung 19 den Ausgleichswert $\Delta v$(t) für die Geschwindigkeit und gibt diesen als Signal 12 aus. Das Signal 12 für den Ausgleichswert $\Delta v$(t) und das Signal 7 werden einem Subtrahierer 15 zugeführt, aus welchem dann der aus dem Ausgleichswert $\Delta v$(t) korrigierte Wert für die Geschwindigkeit $v_{est}$ ausgegeben wird (Bezugszeichen 16).

Die Ermittlung des Signals 7, d. h. einer globalen Geschwindigkeit $R\omega$(t) = v(t) für das Fahrzeug und eines Werts 10 für die Gesamtsteifigkeit $K_{\mu\lambda}$ aus den Werten für die einzelnen Räder erfolgt dabei durch aus dem Stand der Technik geläufige Methoden.

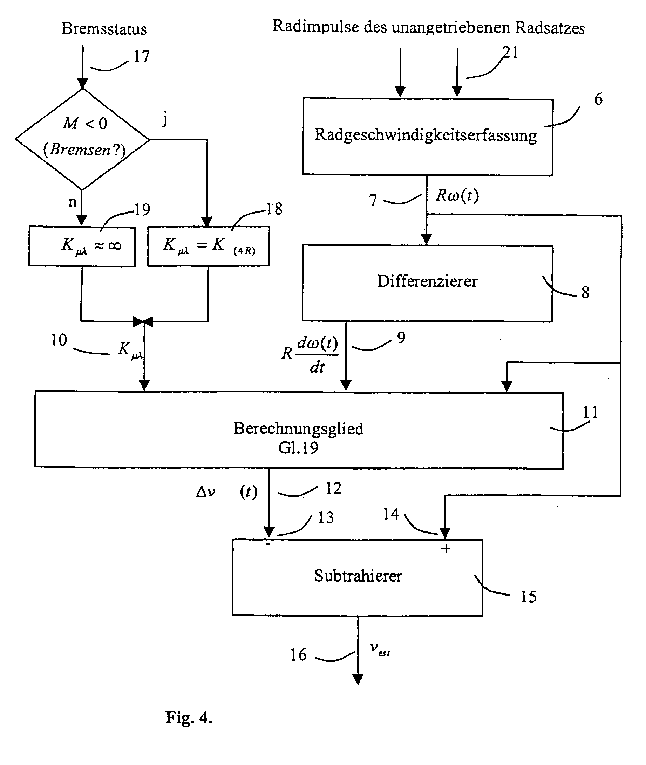

Der grundsätzliche Verfahrensablauf unterscheidet sich für zweiradbetriebene Fahrzeuge nicht von dem anhand der Fig. 3 beschriebenen Verfahren für vierradbetriebene Fahrzeuge. Es bestehen jedoch Unterschiede in der Art, wie die Gesamtsteifigkeit in die Berechnung eingeht. Es werden dabei zwei Zustände unterschieden, nämlich ein Zustand, in dem das Fahrzeug abgebremst wird beziehungsweise ein Zustand, in dem das Fahrzeug beschleunigt wird. In Abhängigkeit von dem Zustand des Fahrzeuges werden unterschiedliche Werte für die Gesamtsteifigkeit berücksichtigt. Die Berechnung zur Ermittlung des Ausgleichswerts, die mittels des Berechnungsglieds 11 durchgeführt wird, erfolgt auch in den Verfahren nach den Fig. 4, 5 und 6 nach Gleichung (19).

Bei dem anhand der Fig. 4 dargestellten Verfahren zur Ermittlung des Ausgleichswerts für ein zweiradbetriebenes Fahrzeug, bei dem die Winkelgeschwindigkeit 21 der nicht angetriebenen Räder in die Berechnung eingeht, wird der Zustand des Fahrzeugs abgefragt, nämlich, ob das Fahrzeug gebremst wird oder nicht (Bezugszeichen 17). Dazu wird das Drehmoment in einer ja/nein-Abfrage dahin getestet, ob es größer oder kleiner als 0 ist. Ist das Drehmoment kleiner als 0, d. h. das Fahrzeug wird gebremst, wird die Steifigkeit $K_{\mu\lambda}$ auf einen Wert $K_{(4R)}$ gesetzt (Bezugszeichen 18). Wird das Fahrzeug dagegen nicht gebremst, wird die Steifigkeit $K_{\mu\lambda}$ auf unendlich gesetzt (Bezugszeichen 19). Das so jeweils ermittelte $K_{\mu\lambda}$ geht in die Berechnung im Berechnungsglied 11 ein.

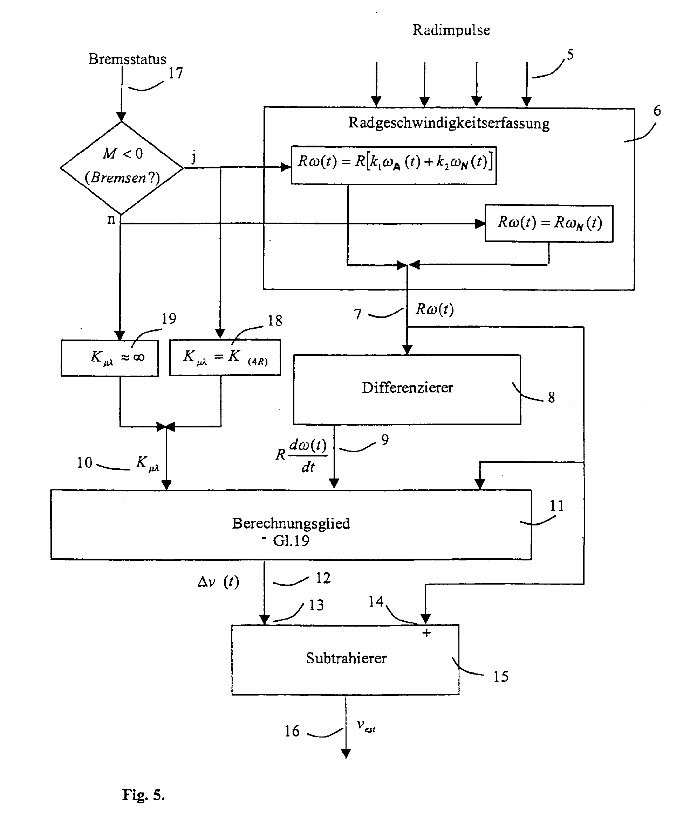

Auch bei dem Verfahren zur Berechnung des Ausgleichswerts, wie es in Fig. 5 für Zweiradantrieb-Fahrzeuge dargestellt ist, bei dem die Winkelgeschwindigkeit aller Räder, d. h. der angetriebenen wie der nicht angetriebenen Räder in die Berechnung eingeht, erfolgt eine derartige Unterscheidung beziehungsweise Berücksichtigung von unterschiedlichen Werten für die Steifigkeit $K_{\mu\lambda}$. Zusätzlich wird jedoch auch eine Unterscheidung bei der Ermittelung der globalen Geschwindigkeit des Fahrzeugs v(t) = $R\omega$(t) im Mittel 6 gemacht.

Im Falle eines gebremsten Fahrzeugs ermittelt sich die Geschwindigkeit v(t) = Rw(t) = R[$k_1\omega_A$(t) + $k_2\omega_N$(t)],

wobei $k_1$ und $k_2$ zwei fahrzeugtypisch zweckmäßig gewählte Gewichtsfaktoren sind und $0 \leq k_1 \leq 1$ und $k_2 \leq 1-k_1$ ist und $\omega_A(t)$ die Winkelgeschwindigkeit der angetriebenen Räder und $\omega_N(t)$ die Winkelgeschwindigkeit der nicht angetriebenen Räder ist. Im nicht gebremsten Fall ist dagegen die Geschwindigkeit $v(t) = R\omega(t) = R\omega_N(t)$.

Werden für die Berechnung der Ausgleichswerte $\Delta v(t)$ jedoch die Winkelgeschwindigkeiten der angetriebenen Räder berücksichtigt, ergibt sich wiederum kein Unterschied bei der Berechnung der Geschwindigkeit $v(t) = R\omega(t)$ sondern nur bei der Auswahl der Steifigkeit $K_{\mu\lambda}$. Diese ergibt sich im gebremsten Fall zu $K_{\mu\lambda} = K_{(4R)}$ während sich die Steifigkeit im nicht gebremsten Fall zu

$$K_{\mu\lambda} = K_{4R} \frac{F_{ZA}}{F_{ZA} + F_{ZN}} \qquad (26)$$

ergibt, wobei $F_{ZA}$ die Normalkraft der angetriebenen und $F_{ZN}$ die Normalkraft der nicht angetriebenen Räder auf deren Auflagepunkte bezeichnet. Die Normalkräfte können dabei zur Vereinfachung auch durch die Achslasten ersetzt werden. Weil die tatsächlichen Achslasten in der Regel unbekannt beziehungsweise beladungsabhängig sind, können zweckmäßiger Weise die Datenblattangaben des Fahrzeugs für die Bestimmung der Faktoren nach Gleichung 26 benutzt werden. Der Ausgleichswert $\Delta v(t)$ wird erfindungsgemäß nur dann richtig bestimmt, wenn in dem Zustand Nichtbremsen der durch Gleichung 26 bestimmte Wert der Steifigkeit 10 eingestellt wird.

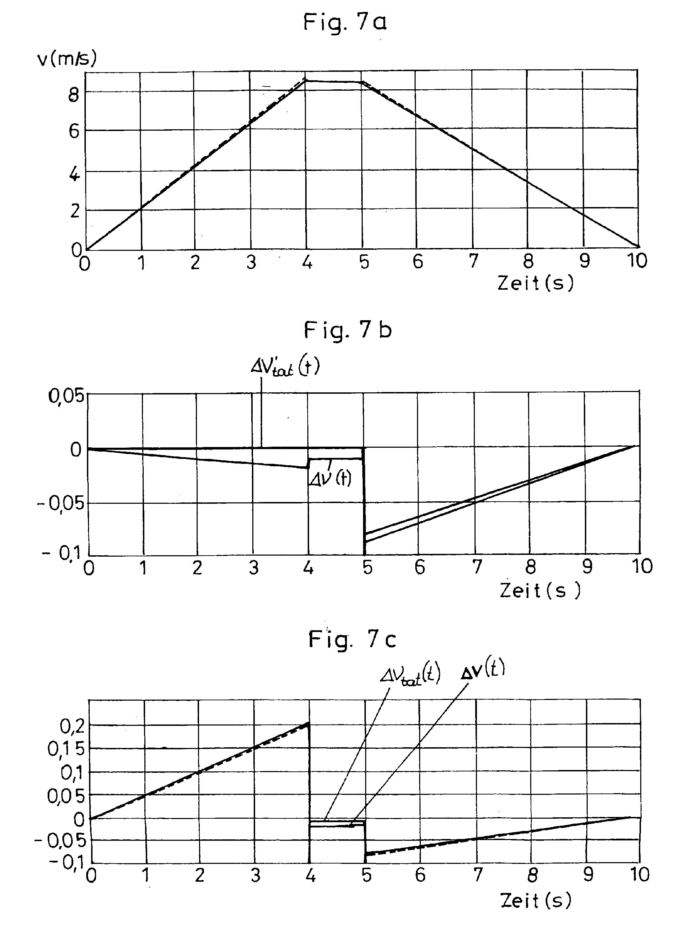

Die Wirksamkeit der erfindungsgemäßen Berechnung der Ausgleichswerte $\Delta v(t)$ ist für ein zweiradangetriebes Fahrzeug in der Fig. 7 dargestellt, wobei die charakteristischen Geschwindigkeitswerte eines Fahrzeugs mit Zweiradantrieb dargestellt sind. In der Zeitperiode 0 bis 4 Sekunden wird das Fahrzeug beschleunigt, während es in der Zeitperiode von 5 bis 10 Sekunden abgebremst wird. In der Zwischenzeit von 4 bis 5 Sekunden wird das Fahrzeug wegen des Roll- und Luftwiderstands leicht abgebremst (Fig. 7a). Die Figuren 7b, 7c zeigen die Differenz zwischen der tatsächlichen Geschwindigkeit und der gemessenen Geschwindigkeit ($v_{tat}(t) - v(t) = \Delta v_{tat}(t)$) und die Ausgleichswerte $\Delta v$ (t) für die Geschwindigkeit. In Fig. 7b sind Kurven für einen nicht angetriebenen Radsatz und in Fig. 7c für einen angetriebenen Radsatz dargestellt. Der unkompensiert bleibende kleine Anteil des Geschwindigkeitsfehlers ist dadurch zu erklären, dass

- das zur Beschleunigung des nichtangetriebenen Radsatzes notwendige Drehmoment und der dadurch verursachte Geschwindigkeitsfehler (Fig. 7b, Zeitbereich 0 bis 4 Sekunden) durch die Geschwindigkeitserfassung durch den nichtangetriebenen Radsatz nicht möglich ist und
- die Erfassung des durch den Luftwiderstand verursachten Geschwindigkeitsfehlers, besonders im freien Auslauf weder mit dem nicht angetriebenen noch mit dem angetriebnen Radsatz physikalisch möglich ist.

Die beiden Fig. 7b und c zeigen jedoch, dass ein maßgeblich großer Anteil der Geschwindigkeitsfehler aufgrund der erfindungsgemäßen Verfahren und mit erfindungsgemäßen Vorrichtungen kompensiert werden kann.

## Patentansprüche

**1.** Verfahren zur Berechnung eines Ausgleichswertes für einen Fehler eines Messwertes ($v(t)$) für eine Lateralgeschwindigkeit eines Rades eines Kraftfahrzeuges, wobei der Fehler aufgrund eines Schlupfes zwischen dem Rad und einem Untergrund entsteht (Schlupffehler),
**dadurch gekennzeichnet, dass**
sich der Ausgleichswert als

$$\Delta v(t) = \frac{R\omega(t)M(t)}{mgRK_{\mu\lambda} + M(t)}$$

mit
$\omega(t)$ als Winkelgeschwindigkeit der Räder,
$M(t)$ als Drehmoment der Räder,
$m$ als Masse des Fahrzeuges,
$g$ als Gravitationsbeschleunigung,
$K_{\mu\lambda}$ als longitudinale Steifigkeit der Räder und
$R$ als Halbmesser der Räder

berechnet.

2. Verfahren zur Berechnung eines Ausgleichswertes für einen Fehler eines Messwertes ($v(t)$) für eine Lateralgeschwindigkeit eines Rades eines Kraftfahrzeuges, wobei der Fehler aufgrund eines Schlupfes zwischen dem Rad und einem Untergrund entsteht (Schlupffehler),
   **dadurch gekennzeichnet, dass**
   sich der Ausgleichswert als

$$\Delta v(t) = \frac{\omega(t)M(t)}{mgK_{\mu\lambda}}$$

   mit
   $\omega(t)$ als Winkelgeschwindigkeit der Räder,
   $M(t)$ als Drehmoment der Räder,
   $m$ als Masse des Fahrzeuges,
   $g$ als Gravitationsbeschleunigung und
   $K_{\mu\lambda}$ als longitudinale Steifigkeit der Räder
   berechnet.

3. Verfahren zur Berechnung eines Ausgleichswertes für einen Fehler eines Messwertes ($v(t)$) für eine Lateralgeschwindigkeit eines Rades eines Kraftfahrzeuges, wobei der Fehler aufgrund eines Schlupfes zwischen dem Rad und einem Untergrund entsteht (Schlupffehler),
   **dadurch gekennzeichnet, dass**
   sich der Ausgleichswert als

$$\Delta v(t) = \frac{v(t)}{gK_{\mu\lambda}} \cdot \dot{v}(t) \quad \text{mit}$$

   $g$ als Gravitationsbeschleunigung,
   $K_{\mu\lambda}$ als longitudinale Steifigkeit der Räder
   v(t) als gemessene Lateralgeschwindigkeit der Räder und
   $\dot{v}(t)$ als erste zeitliche Ableitung der gemessenen Lateralgeschwindigkeit $v(t)$ der Räder
   berechnet.

4. Verfahren zur Berechnung eines Ausgleichswertes für einen Fehler eines Messwertes ($v(t)$) für eine Lateralgeschwindigkeit eines Rades eines Kraftfahrzeuges, wobei der Fehler aufgrund eines Schlupfes zwischen dem Rad und einem Untergrund entsteht (Schlupffehler),
   **dadurch gekennzeichnet, dass**
   sich der Ausgleichswert als

$$\Delta v(t) = \frac{R\omega(t)}{gK_{\mu\lambda}} \cdot R\dot{\omega}(t) \quad \text{mit}$$

   $g$ als Gravitationsbeschleunigung,
   $K_{\mu\lambda}$ als longitudinale Steifigkeit der Räder
   $R$ als Halbmesser der Räder
   $\omega(t)$ als Winkelgeschwindigkeit der Räder und
   $\omega(t)$ als der ersten zeitlichen Ableitung der Winkelgeschwindigkeit $\omega(t)$ der Räder
   berechnet.

5. Verfahren zur Berechnung eines Ausgleichswertes für eine Fehler eines Messwertes ($v_F(t)$) für eine Geschwindigkeit eines Kraftfahrzeuges

**dadurch gekennzeichnet, dass**

- in einem ersten Schritt ein globaler Wert ω(*t*) für die Winkelgeschwindigkeit der Räder ermittelt wird,
- in einem nächsten Schritt mittels eines Differenziergliedes die erste zeitliche Ableitung ώ(*t*) der Winkelgeschwindigkeit ω(*t*) ermittelt wird,
- in einem Schritt ein Ausgleichswert für einen Fehler des Messwertes nach der in Anspruch 4 angegebenen Gleichung berechnet wird, wobei $K_{\mu\lambda}$ die Gesamtsteifigkeit und *R* der durchschnittliche Halbmesser der Räder ist.

**6.** Verfahren zur Berechnung eines Ausgleichswertes für eine Fehler eines Messwertes ($s_F(t)$) für einen Weg eines Kraftfahrzeuges
**dadurch gekennzeichnet, dass**

der Ausgleichswert Δ*s* mit der folgenden Gleichung berechnet wird: $\Delta s = \dfrac{v_F(t_1)^2 - v_F(t_2)^2}{2gK_{\mu\lambda}}$

wobei
$v_F(t)$ die Fahrzeuggeschwindigkeit,
*g* die Gravitationsbeschleunigung,
$K_{\mu\lambda}$ die Gesamtsteifigkeit der Räder ist.

**7.** Verfahren nach einem der Ansprüche 1 bis 6, **dadurch gekennzeichnet, dass** die Gesamtsteifigkeit $K_{\mu\lambda}$ der Radsätze während des Betriebes fortlaufend ermittelt wird.

**8.** Verfahren nach einem der Ansprüche 1 bis 7, **dadurch gekennzeichnet, dass** die Gesamtsteifigkeit $K_{\mu\lambda}$ der Räder im ungebremsten Zustand im Falle eines zweiradgetriebenen Fahrzeugs bei nicht angetriebenen Rädern als unendlich groß, im Falle eines vierradgetriebenen Fahrzeugs bei allen Räder ebenfalls als unendlich groß angenommen und im Falle eines zweiradgetriebenen Fahrzeugs bei angetriebenen Rädern als $K_{\mu\lambda} \cdot \dfrac{F_{ZA}}{F_{ZA} + F_{ZN}}$ wird, wobei

$K_{\mu\lambda}$ der nach Anspruch 8 ermittelte Wert, $F_{ZA}$ die Normalkraft des angetriebenen und $F_{ZN}$ des nicht angetriebenen Radsatzes ist.

**Claims**

**1.** Procedure for computing a compensation for a sensor value (*v(t)*) error in measuring the lateral speed of a wheel of a motor vehicle, wherein the error is caused by a slip between the wheel and a surface (slip error),
**characterized in that**
the compensation value computes as

$$\Delta v(t) = \frac{R\omega(t)M(t)}{mgRK_{\mu\lambda} + M(t)}$$

where
ω*(t)* is the angular velocity of the wheels,
*M(t)* is the torque of the wheels,
*m* is the mass of the vehicle,
*g* is the gravitational acceleration,
$K_{\mu\lambda}$ is the longitudinal rigidity of the wheels, and
*R* is the radius of the wheels.

**2.** Procedure for computing a compensation for a sensor value (*v(t)*) error in measuring the lateral speed of a wheel of a motor vehicle, wherein the error is caused by a slip between the wheel and a surface (slip error),

**characterized in that**
the compensation value computes as

$$\Delta v(t) = \frac{\omega(t)M(t)}{mgK_{\mu\lambda}}$$

where
$\omega(t)$ is the angular velocity of the wheels,
$M(t)$ is the torque of the wheels,
$m$ is the mass of the vehicle,
$g$ is the gravitational acceleration, and
$K_{\mu\lambda}$ is the longitudinal rigidity of the wheels.

3. Procedure for computing a compensation for a sensor value ($v(t)$) error in measuring the lateral speed of a wheel of a motor vehicle, wherein the error is caused by a slip between the wheel and a surface (slip error),
**characterized in that**
the compensation value computes as

$$\Delta v(t) = \frac{v(t) \cdot 'v(t)}{gK_{\mu\lambda}}$$

where
$g$ is the gravitational acceleration,
$K_{\mu\lambda}$ is the longitudinal rigidity of the wheels
$v(t)$ is the measured lateral speed of the wheels, and
$'v(t)$ is the first time derivative of the measured lateral speed $v(t)$ of the wheels.

4. Procedure for computing a compensation for a sensor value ($v(t)$) error in measuring the lateral speed of a wheel of a motor vehicle, wherein the error is caused by a slip between the wheel and a surface (slip error),
**characterized in that**
the compensation value computes as

$$\Delta v(t) = \frac{R\omega(t) \cdot R'\omega(t)}{gK_{\mu\lambda}}$$

where
$g$ is the gravitational acceleration,
$K_{\mu\lambda}$ is the longitudinal rigidity of the wheels
$R$ is the radius of the wheels
$\omega(t)$ is the angular velocity of the wheels, and
$'\omega(t)$ is the first time derivative of the measured lateral speed $\omega(t)$ of the wheels.

5. Procedure for computing a compensation value compensating a sensor value $(v_F(t))$ error in measuring a speed of a motor vehicle,
**characterized in that**

   - at a first step, a global value $\omega(t)$ of the angular velocity of the wheels is determined,
   - at a next step, a differential element is used to determine the first time derivative $'\omega(t)$ of the angular velocity $\omega(t)$,
   - at another step, a compensation value for compensating a sensor value error is computed using the equation of claim 4, where $K_{\mu\lambda}$ is the total rigidity, and R is the average radius of the wheels.

6. Procedure for computing a compensation value for compensating a sensor value ($S_F(t)$) error in measuring the travel of a motor vehicle,
**characterized in that**
the compensation value Δs computes according to the following equation:

$$\Delta s = \frac{v_F(t_1)^2 - v_F(t_2)^2}{2gK_{\mu\lambda}}$$

where
$v_F(t)$ is the vehicle speed,
g is the gravitational acceleration, and
$K_{\mu\lambda}$ is the total rigidity of the wheels.

**7.** Procedure of claims 1 to 6, **characterized in that** the total rigidity $K_{\mu\lambda}$ of the pairs of wheels is continuously determined during operation.

**8.** Procedure of claims 1 to 7, **characterized in that** the total rigidity $K_{\mu\lambda}$ of the non-braked and non-driven wheels of a two-wheel drive vehicle is assumed to be infinitely great, that said total rigidity of all wheels of a four-wheel drive vehicle is also assumed to be infinitely great, and that said total rigidity of the driven wheels of a two-wheel drive vehicle computes as

$$\frac{K_{\mu\lambda} \cdot F_{ZA}}{F_{ZA} + F_{ZN}}$$

where $K_{\mu\lambda}$ is the value determined according to claim 8, $F_{ZA}$ is the normal force of the driven pair of wheels, and $F_{ZN}$ is the normal force of the non-driven pair of wheels.

**Revendications**

**1.** Procédé de calcul d'une valeur de compensation pour une erreur d'une valeur de mesure (v(t)) pour une vitesse latérale d'une roue d'un véhicule, l'erreur résultant d'un glissement entre la roue et un support (erreur de glissement), **caractérisé en ce que**
la valeur de compensation se calcule en tant que

$$\Delta v(t) = \frac{Rw(t)M(t)}{mgRK_{\mu\lambda} + M(t)}$$

avec
w(t) en tant que vitesse angulaire des roues,
M(t) en tant que couple de rotation des roues
m en tant que masse du véhicule
g en tant qu'accélération de gravitation
$K_{\mu\lambda}$ en tant que rigidité longitudinale des roues et
R en tant que demi-diamètre des roues

**2.** Procédé de calcul d'une valeur de compensation pour une erreur d'une valeur de mesure (v(t)) pour une vitesse latérale d'une roue d'un véhicule, l'erreur résultant d'un glissement entre la roue et un support (erreur de glissement), **caractérisé en ce que**
la valeur de compensation se calcule en tant que

$$\Delta v(t) = \frac{w(t)M(t)}{mgRK_{\mu\lambda}}$$

avec
w(t) en tant que vitesse angulaire des roues,
M(t) en tant que couple de rotation des roues
m en tant que masse du véhicule
g en tant qu'accélération de gravitation et
$K_{\mu\lambda}$ en tant que rigidité longitudinale des roues

3. Procédé de calcul d'une valeur de compensation pour une erreur d'une valeur de mesure (v(t)) pour une vitesse latérale d'une roue d'un véhicule, l'erreur résultant d'un glissement entre la roue et un support (erreur de glissement), **caractérisé en ce que**
la valeur de compensation se calcule en tant que

$$\Delta v(t) = \frac{v(t)}{gK_{\mu\lambda}} v(t)$$

avec
g en tant qu'accélération de gravitation,
$K_{\mu\lambda}$ en tant que rigidité longitudinale des roues,
v(t) en tant que première dérivation dans le temps de la vitesse latérale mesurée v(t) des roues

4. Procédé de calcul d'une valeur de compensation pour une erreur d'une valeur de mesure (v(t)) pour une vitesse latérale d'une roue d'un véhicule, l'erreur résultant d'un glissement entre la roue et un support (erreur de glissement), **caractérisé en ce que**
la valeur de compensation se calcule en tant que

$$\Delta v(t) = \frac{Rw(t)}{gK_{\mu\lambda}} Rw(t)$$

avec
avec
g en tant qu'accélération de gravitation,
$K_{\mu\lambda}$ en tant que rigidité longitudinale des roues
R en tant que demi-diamètre des roues
w(t) en tant que vitesse angulaire des roues et
w(t) en tant que première dérivation dans le temps de la vitesse angulaire w(t) des roues

5. Procédé de calcul d'une valeur de compensation pour une erreur d'une valeur de mesure ($v_F$(t)) pour une vitesse d'un véhicule,
**caractérisé en ce que**

- dans un premier temps, une valeur globale w(t) est déterminée pour la vitesse angulaire des roues,
- au cours d'un prochain pas, la première dérivation dans le temps w(t) de la vitesse angulaire w(t) est déterminée à l'aide d'un élément de différenciation,
- au cours d'un autre pas, une valeur de compensation pour une erreur de la valeur de mesure est calculée selon l'équation indiquée dans la revendication 4, $K_w$ représentant la rigidité globale et R le demi-diamètre moyen des roues.

**6.** Procédé de calcul d'une valeur de compensation pour une erreur d'une valeur de mesure ($s_F(t)$) pour une course d'un véhicule,
**caractérisé en ce que**
la valeur de compensation $\Delta s$ est calculée avec l'équation suivante :

$$\Delta s = \frac{v_F(t_1)^2 - v_F(t_2)^2}{2gK_{\mu\lambda}}$$

$w_F(t)$ étant la vitesse du véhicule,
g l'accélération de gravitation
$K_{\mu\lambda}$ la rigidité longitudinale des roues

**7.** Procédé selon l'une des revendications 1 à 6, **caractérisé en ce que** la rigidité totale $K_{\mu\lambda}$ des jeux de roues est constamment déterminée pendant le fonctionnement.

**8.** Procédé selon l'une des revendications 1 à 7, **caractérisé en ce que** la rigidité totale $K_{\mu\lambda}$ des roues à l'état non freiné est supposée infiniment élevée dans le cas d'un véhicule entraîné par deux roues, également infiniment élevée dans le cas d'un véhicule entraîné par quatre roues pour toutes roues et, dans le cas d'un véhicule entraîné par deux roues lorsque les roues sont entraînées en tant

$$K_{\mu\lambda} = \frac{F_{ZA}}{F_{ZA} + F_{ZN}}$$

$K_{\mu\lambda}$ étant la valeur déterminée selon la revendication 8, $F_{ZA}$ la force normale du jeu de roues entraîné et $F_{ZN}$ celle du jeu de roues non entraîné.

$m_A$

$J, m_R$

$m_A g$

$\omega$

$R$

$F_x$

3

2

$v$

$M$

$F_Z = (m_A + m_R)g$

$F_x = \mu F_Z$

$- F_x$

4

$z$

$v$

$x$

Fig. 1.

$\mu$

$\lambda$

-1

0

1

$\infty$

$R\omega = 0$

$v = R\omega$

$v = R\omega/2$

$v = 0$

Haftbereich

Fig. 2.

Radimpulse

5

| Radgeschwindigkeitserfassung | 6 |

$7 \qquad R\omega(t)$

| Differenzierer | 8 |

10

$K_{\mu\lambda} = K_{(4R)}$

$R\dfrac{d\omega(t)}{dt} \qquad 9$

| Berechnungsglied Gl.19 | 11 |

$\Delta v \qquad (t) \qquad 12$

13     14

| −     Subtrahierer     + | 15 |

$16 \qquad v_{est}$

**Fig. 3.**

Bremsstatus

Radimpulse des unangetriebenen Radsatzes

17

21

$M < 0$
*(Bremsen?)* j

Radgeschwindigkeitserfassung 6

n

19

18

$7 \quad R\omega(t)$

$K_{\mu\lambda} \approx \infty$

$K_{\mu\lambda} = K_{(4R)}$

Differenzierer 8

10 $\quad K_{\mu\lambda}$

$R\dfrac{d\omega(t)}{dt} \quad 9$

Berechnungsglied
Gl.19 11

$\Delta v \quad (t) \quad 12$

13

14

− +

Subtrahierer 15

16 $\quad v_{est}$

Fig. 4.

Radimpulse

Bremsstatus
17

5

$M < 0$
(Bremsen?)

j

6

Radgeschwindigkeitserfassung

$R\omega(t) = R\big[k_1\omega_{\mathbf{A}}(t) + k_2\omega_{\mathbf{N}}(t)\big]$

n

$R\omega(t) = R\omega_{\mathbf{N}}(t)$

7 $R\omega(t)$

19 18

$K_{\mu\lambda} \approx \infty$ $K_{\mu\lambda} = K_{(4R)}$

Differenzierer

8

10 $K_{\mu\lambda}$ $R\dfrac{d\omega(t)}{dt}$ 9

Berechnungsglied
- Gl.19

11

$\Delta v\ (t)$ 12

13 14

+

Subtrahierer

15

16 $v_{est}$

Fig. 5.

Bremsstatus

Radimpulse des angetriebenen Radsatzes

**Fig. 6.**

## Fig. 7a

## Fig. 7b

## Fig. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616447 A1
- US 6549842 B2
- US 2004186649 A1